# EUROPEAN PATENT APPLICATION

(11) **EP 2 784 733 A1**
(43) Date of publication of application: **01.10.2014**
(21) Application number: 13305412.2
(22) Date of filing: 29.03.2013
(51) Int. Cl.: G06Q 10/08

(54) **A method for tracking a person**

(71) Applicant: Orange, 75015 Paris (FR)
(72) Inventor: Dubois, Fabian, TOKYO, 153-0051 (JP); Beal, Sebastien, TOKYO, 151-0053 (JP)

(57) **Abstract**

The invention relates to a method for tracking at least one person in a compound, at least one tracking parameter comprising at least one position of a person, called current tracking parameter, being stored in a tracking device, the method comprising the following steps executed by the tracking device :
- Receiving a message reporting an event detected by a device located in the compound,
- Determining a position in the compound associated to the detected event,
- Predicting a new value of the tracking parameter based on the current parameter,
- Associating the detected event with the new tracking parameter based on at least one parameter representing characteristics of the event.

## Description

### FIELD OF THE PRESENT SYSTEM:

The present invention generally relates to a method for tracking at least one person in a compound.

### BACKGROUND OF THE PRESENT SYSTEM:

Various solutions are known to track a person within a compound. A first solution consists in using video cameras deployed within the compound. Such a first intrusive solution is expensive and requires heavy processing capabilities.

A second solution relies on the use of RFID (*Radio Frequency IDentification*) tags. This solution requires each person to be located through wearing a RFID tag so as to enable their detection by RFID detecting devices such as an RFID reader. However, such a method does not give a precise location of the person as the person must check every time they enter or exit a room within a compound.

Today there is still a need to a simple and non intrusive person tracking solution that can rely upon existing devices within a house. There is a further need for a solution that does not require heavy processing.

### SUMMARY OF THE PRESENT SYSTEM:

It is an objective of the present invention to overcome disadvantages and/or make improvements in the prior art.

In that respect, the present invention relates to a method according to claim 1.

The method of the invention enables the tracking of persons in a compound using various kinds of events for triggering the tracking of the person.

In the method of the invention, current tracking parameters are stored in a tracking device. Each current tracking parameter corresponds to one person already tracked by the tracking device. A tracking parameter comprises at least one position of a tracked person, and an identifier of the tracked person.

Upon detection of an event by a device located in a compound, such as the turn on of the lights, this event is reported to the tracking device.

The tracking device determines for each person already tracked, a new tracking parameter using known tracking algorithms.

Then based on characteristics of the detected event, such as its location, etc., the tracking device associates one of the new tracking parameters, i.e. a person, to the detected event.

The tracking parameter is then updated with the new location of the person, i.e. the location of the detected event.

The method further comprises a step of receiving an identification information of a person associated to the detected event.

When the detected event is associated with an identification information of a person associated to the detected event, it is easier to associate a new tracking parameter with the rightful tracked person using the identification information.

The invention relates also to a device according to claim 7.

Finally, one object of the invention concerns a computer program, in particular a computer program on or in an information medium or memory, suitable for implementing the method for tracking a person object of the invention. This programs can use any programming language, and be in the form of source code, binary code, or of code intermediate between source code and object code such as in a partially compiled form, or in any other desirable form for implementing the communication methods according to the invention.

The information medium may be any entity or device capable of storing the program. For example, the medium can comprise a storage means, such as a ROM, for example a CD ROM or a microelectronic circuit ROM, or else a magnetic recording means, for example a diskette (floppy disk) or a hard disk.

Moreover, the information medium may be a transmissible medium such as an electrical or optical signal, which may be conveyed via an electrical or optical cable, by radio or by other means. The programs according to the invention may in particular be downloaded from a network of Internet type.

The present system and method are explained in further detail, and by way of example, with reference to the accompanying drawings wherein:
FIG. 1 represents a compound comprising a plurality of rooms,
FIG. 2 represents the steps of the method for tracking a person executed by the device 55 capable of tracking a person,
FIG. 3 represents a tracking device according to the invention,
FIG. 4 represents the steps of the method for detecting a person executed by the device capable of detecting a person:
FIG. 5 represents a person modelised in three dimensions by three cylinders.

The following are descriptions of illustrative embodiments that when taken in conjunction with the following drawings will demonstrate the above noted features and advantages, as well as further ones. In the following description, for purposes of explanation rather than limitation, illustrative details are set forth such as architecture, interfaces, techniques, element attributes, etc. However, it will be apparent to those of ordinary skill in the art that other embodiments that depart from these details would still be understood to be within the scope of the appended claims. Moreover, for the purpose of clarity, detailed descriptions of well known devices, circuits, tools, techniques and methods are omitted so as not to obscure the description of the present system. It should be expressly understood that the drawings are included for illustrative purposes and do not represent the scope of the present system. In the accompanying drawings, like reference numbers in different drawings may designate similar elements.

For purposes of simplifying a description of the present system, the terms "operatively coupled", "coupled" and formatives thereof as utilized herein refer to a connection between devices and/or portions thereof that enables operation in accordance with the present system. For example, an operative coupling may include one or more of a wired connection and/or a wireless connection between two or more devices that enables a one and/or two-way communication path between the devices and/or portions thereof. An operative coupling may also include a wired and/or wireless coupling to enable communication between a media content platform and one or more user devices in accordance with an embodiment of the present system. An operative coupling may also relate to an interaction between program portions and thereby may not describe a physical connection so much as an interaction based coupling.

The term rendering and formatives thereof as utilized herein refer to providing content, such as digital media or a graphical user interface (GUI), such that it may be perceived by at least one user sense, such as a sense of sight and/or a sense of hearing. For example, the present system may render a user interface such as a list of available event generating or detecting devices on a display device of a tracking system as in the present system. The term rendering may also comprise all the actions required to generate a GUI prior to the display, like e.g. a map representation generated on a server side for a browser application on a user device.

The system, device(s), method, user interface, etc., described herein address problems in prior art systems. The man skilled in the art may easily apply the present teachings to any electronic device capable of detecting an event and reporting it.

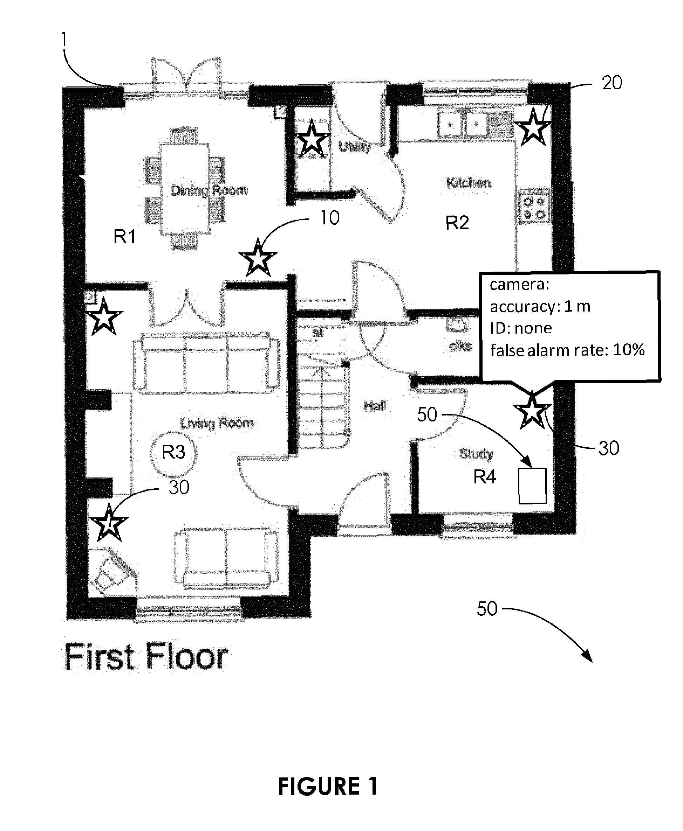

**Figure 1** represents a compound 1, illustrated here as an apartment, comprising a plurality of rooms R1 (dining room), R2 (kitchen), R3 (living room), and R4 (study). Each room R1-R4 comprises one or more devices capable of detecting and/or generating an event, respectively 10, 20, 30, 40. They will be referred to as event detecting or generating devices here after. Such event detecting devices may be for instance a light switch, a ZigBee power meter, a plug, a TV, a fridge, an oven, or any other devices such as appliances, contact or contactless readers, sensors, electronic devices ... that can experience a change in status or powering mode or a detection of another device. Such a change is referred to as an event. An event may be, for example, the turning on/off of lights, a television being turned on or off, a channel change, the detection of a RFID tag, an electronic device connecting to a wireless network hosted in the compound 1, the detection of a person by means of a thermal sensor, etc. A tracking device or unit 50, such as a computer or a server is capable of tracking a person within the compound 1. Device 50 is operatively connected to the event detecting devices 10, 20, 30, and 40.

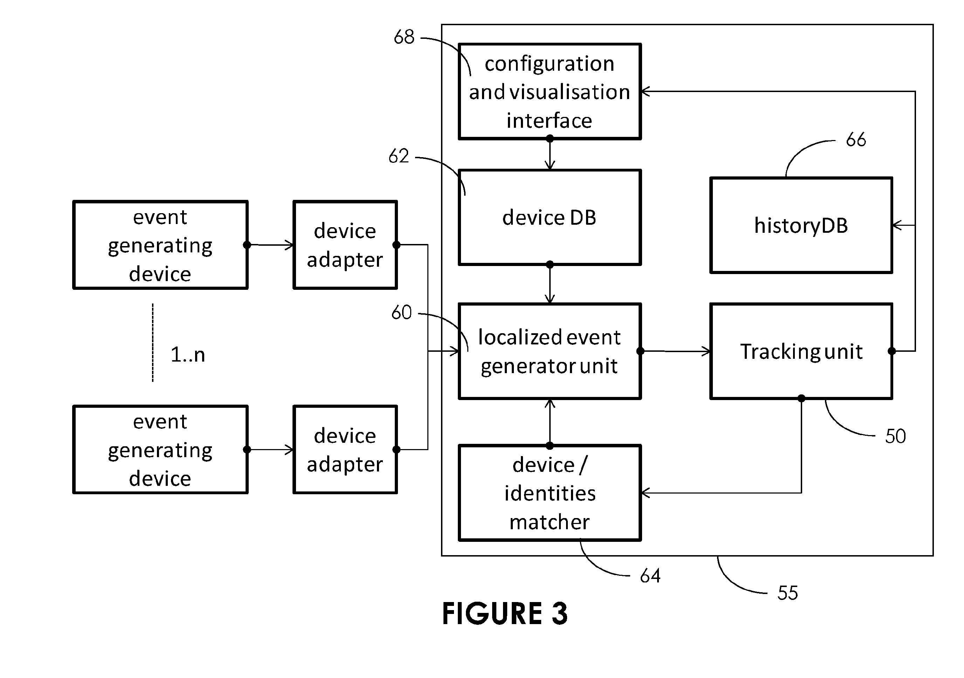

Figure 3 is an illustrative embodiment of the present system. It comprises a plurality of event generating or detecting devices associated to a device adapter to report the detected events. In the present tracking system, the event detecting devices may indeed be operatively coupled with device adaptors to enable the reporting of events through messages to the present tracking device 50. Existing devices such as an access point, an IP TV, "smart" appliances ... may only need a software adaptor to enable such a reporting. Other event detecting devices that are initially passive devices (light switch, electrical plub ...) may be associated with an adaptor device so as to detect the event (power surge, powering off ...) and report it. In the here after description, the event detecting device like devices 10, 20, 30, and 40 will correspond to the device itself and its associated adaptor, whether software or hardware based.

The present system may further comprise a tracking system 55 comprising different modules and databases. A localized event generator 60 unit will collect the alert messages from the event detecting devices 10, 20, 30 and 40. It will associate each event as explained here after with additional data, such as configuration parameters and location, related to the event detecting device that reported the event. Such additional data will be stored in a device database 62 in association with a unique identifier for each event detecting device.

The present tracking system 55 will further comprise the tracking device or unit 50 for implementing the present method, and a history database 66 for storing the tracking parameters, e.g. their history of locations, for each tracked person in the compound. Each target or tracked person is associated to a user identifier (or user id) to which corresponds in the history database 66 a series of locations and associated time stamp. A device/identity matcher module 64 is also available to assist the tracking unit 50 in associating an event with one or more of the tracked persons.

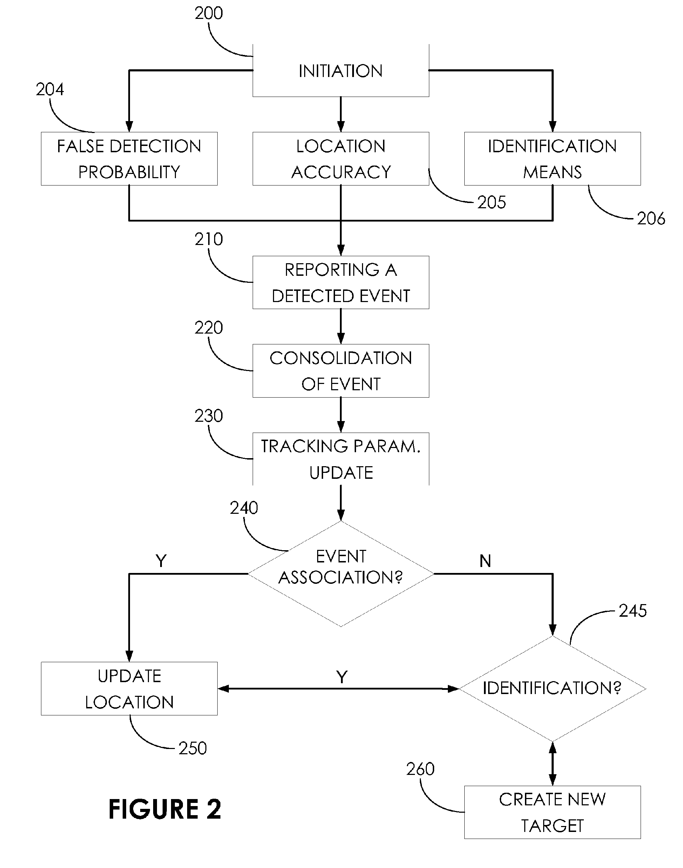

**Figure 2** represents the steps of the present method for tracking a person as executed by the tracking device 50.

In an initiation step 200, a map representing the compound 1 and the various rooms R1-R4 of the compound 1 is uploaded in a device database 62 of the tracking system 55.

The location of the event detecting devices 10, 20, 30, 40 are known on the map through their location stored in the device database 62. Thus each event detecting device is associated in the device database 62 by means of a set of coordinates on the compound map available at an entry for the unique device identifier of the device.

Configuration data or parameters are provided for each event detecting device 10, 20, 30, 40 for instance through the configuration and visualization interface 68 of the tracking system 55, as seen in Figure 3. The configuration parameters are further stored in the device database 62 at the entry for the unique device identifier. They may include on top of the device location a false detection threshold, a location accuracy, and means of identification if available:
- the false detection probability or threshold 204 (probability of a false alarm) may define how reliable the event may be,
- the location accuracy 205, or area of interest, may define how far a person can be to generate the event,
- if the event generating device is associated to means capable of identifying a person 206, such as RFID reader or a wireless access point (through identifying the mobile device connecting to the network), this information is stored in the location database of the tracking device 50.

For instance if the event detecting device is a light switch or an electrical plug, detecting a power surge or cut off will be 100% accurate, and the reported event will be reliable. The false detection probability is then nil. As the person needs to approach at arms length the light switch, the location accuracy will be e.g. 50cm. No means of identification is available for such an event generating device. If the event detecting device is a TV set, detecting a channel change or a powering on/off will not be so reliable as the TV may go off on a power saving mode. The false probability detection may be 30% for instance. The accuracy range may be 10m as the tracked person (referred to as a target here after) may be using a remote control. A person connecting his smartphone to the WiFi network of compound 1 may be associated to a false detection probability of 10% (the person may not be within the premises as he connect from outside), the location accuracy, as the network is available all over the compound, will be the size of the compound, making the access point offering the WiFi an event detecting device with poor location accuracy. The smartphone owner identification to the network will serve as identification means for the tracked person. The identification means may be also be associated to false identification probability, here for instance 20%, as the smartphone may be borrowed by another user.

The initiation step 200 will also allow the connection of the different event detection devices 10, 20 30 and 40 to the tracking system 55 through different communication routes that are beyond the scope of the present system.

In a following step, the tracking device 50 receives at least one message reporting an event detected by one or more of the event detecting devices 10, 20, 30, 40. The messages are first sent by the device adaptors to the localized event generator unit 60 in a step 210. Different push or pull modes may be used to reporting the event messages.

The messages may be buffered by the localized event generator unit 60 for instance over a predefined period of time T. Indeed, a period of time T, e.g. 100ms, may be used to define the update rate of the tracking unit 50. At a current time t, all the event messages reported during the interval [t-T, t] will be collected and grouped in a set of events E=(e1, e2, ... eN). At each interval of time T, the tracking unit 50 will pull for the set of events, or alternatively the localized event generator unit 60 will push the set of events E to the tracking unit 50.

These event messages, comprising characteristics, i.e. information about the nature of the event, a timeslot for the event and a unique identifier for the event detecting device reporting the event, are consolidated in a further step 220 by the localized event generator unit 60. Using the unique identifier for the event detecting device reporting the event, the localized event generator 60 will enrich the event information with further characteristics retrieved in the device database 62 for the entry corresponding to the unique identifier, such as the device configuration parameters and the device location to the event message.

Thus, each event as reported to the tracking unit 50 may comprise one or more of the following parameters representing characteristics of the event:
- information such as the nature of the event, e.g. the detection of a person by a thermal sensor, powering on/off, access to a network, flipping of a channel ...),
- the location of the event generating device
- the timeslot of the event, and;
- the configuration parameters of the event generating device, i.e. location accuracy, the false detection probability, and the identification of a person when available through the identification means.

In an additional embodiment of the present method, when no identification data is available, the device/identifies matcher module 64 may add identification data to the event by matching its timeslot with the most likely person identity as known from the history (also called location) database 66. Indeed, the matcher module 64 may use probabilistic algorithm to match an event with information known about a person's habits as stored in the history database 66. The matching may use additional information such as the event nature to improve the reliability of the identification information. The uncertainty of the matching, as calculated by the probabilistic algorithms may be used as the false identification probability mentioned before.

Indeed, knowing the timeslot of the event (e.g. event generating device10 between 12:00 and 13:00) and having as value percentages of occurrence of each user id in the system for such an event (e.g user1:20%, user2; 50%, user3: 30%), the system will be able to associate the most likely target through identification data or information, such as his user id to the event. **If** an identity is attached to the output and knowing the device originating the events, it will increase the tracking performance.

The tracking device 50 is operatively connected to the history database 68 which stores previous results of tracking of a person, and their associated timestamp in association with the user identifier. For a given person already tracked by the tracking device 50, a current value of a tracking parameter is stored in this database. A tracking parameter comprises a list of the positions of the person during a predetermined amount of time, and an identification of the person.

Those tracking parameters are used to predict the movement of the tracked person.

The tracking device 50 may work in a recursive way. To do so, it will have a set of targets (t1, t2, ... tm), each target representing a tracked person (i.e. a user id) and is associated to a tracking parameter in the history database 66. In a step 230, the device 50 predicts at the time t for each person already tracked a new value of the tracking parameter associated to a person based on the current tracking parameter stored in the database (corresponding to the previous time stamp, e.g. t-T). Each target may be associated to a Kalman filter, the prediction step of the Kalman filter being used to the new positions of each target at the current time t. As the tracking system 55 generates more tracking data, the history database 66 will allow for a more reliable prediction of the new tracking parameter for each target.

The new tracking parameter comprises a new position for the person on top of the already stored positions. This new position is the result of the prediction executed during step 230.

Using the message reporting an event detected by an event detecting device during step 210, and the characteristics added by the localized event generator unit 60 in step 220, the tracking device 50 checks if at least one of the new value of the tracking parameters may be associated with an event during a step 240. The association will be based on a match between a new value of a tracking parameter and one or more of the parameters representing characteristics of each event. The association may take into account for instance the location accuracy as associated to the event, to check if a target has had the time to reach the event detecting device within its location accuracy at the timeslot, considering the target's previous position and history of his tracking parameter. The false detection probability may also be taken into account to reject a potential target if the false detection probability is high for the event.

In case several events may be associated with the tracking parameter, the tracking unit 50 will select from the set of events E the events matching the new tracking parameter based on at least one parameter representing characteristics of the detected events.

If at least one association can be made (answer Yes to act 240), then the tracking parameter is updated/corrected with the location of the detected event (or selection of detected events) during a step 250. The location accuracy of the event detecting device may be taken into account for updating the tracking parameter for the target. The target (user id) entry in the history database 66 is then updated with the corrected tracking parameter at the time t. If no association can be made with the updated tracking parameter (No to act 240), but an identification information for a known target is available in the message reporting the event (answer Yes to act 245), then the entry in the history database 66 for that known target is updated with the event location, in a step 250.

If there is no match between the position of the detected event and a tracking parameter stored in the database (No to both acts 240 and 245)-, i.e. that the event does not correspond to a know target, then the tracking device 50 creates, during a step 260, a new entry in the history database 66 with a new tracking parameter comprising the location of the event. The new entry will correspond to a new target for which identification may be available in the event message.

Steps 240 to 260 will allow the creation, update and deletion of targets. A known target can be seen as a target with an entry to a set value for a tracking parameter in the history database 66.

One of the event detecting devices 10, 20, 30, 40 may comprise for example a based on a thermal sensor 55.

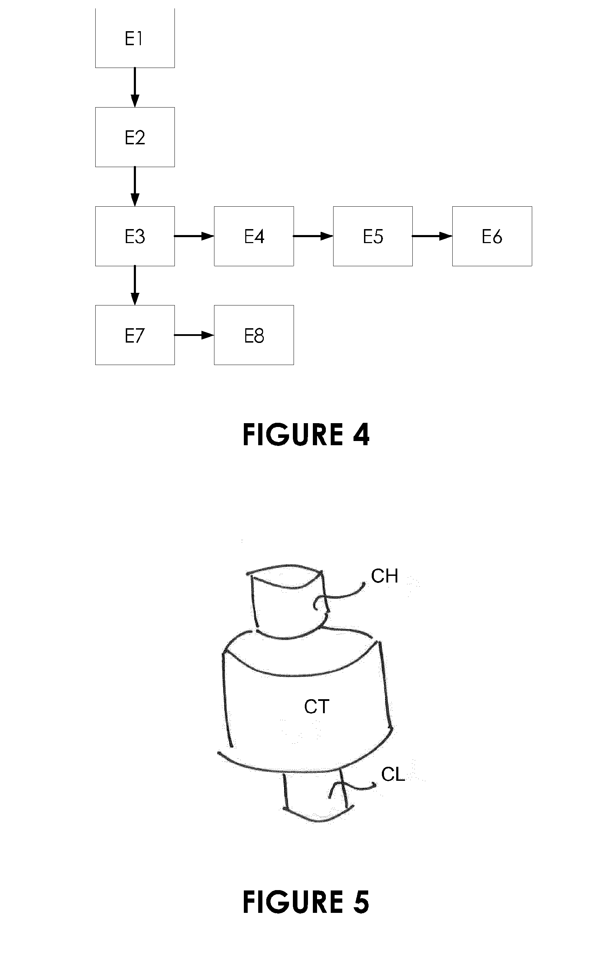

**Figure 4** represents the steps of the method for detecting a person executed by the thermal sensor 55.

In a step E1, the thermal sersor or device 55 receives at least one frame F taken by the thermal sensor, 10, 20 30, 40.

For each pixel Pᵢ of the frame F, the device 55 determines, in a step E2, a value of a parameter θᵢ representing a temperature associated with the pixel Pᵢ.

In a step E3, the device 55 compares the value of the parameter θᵢ representing the temperature associated with the pixel Pᵢ with a threshold Tᵢ associated to the pixel Pᵢ.

If the value of the parameter θᵢ representing the temperature associated with the pixel Pᵢ is above the threshold Tᵢ associated to the pixel Pᵢ, then the device 55 determines, in a step E4, if pixel Pᵢ belongs to at least one group Gⱼ of adjacent pixels.

In a step E5, the group of adjacent pixels Gⱼ is compared with models of pixel groups modeling a person.

If match is found between the group of pixels Gⱼ and one of the models of pixels group, then the device 55 calculates in a step E6 the location of the person in the compound 10.

If the value of the parameter θᵢ representing the temperature associated with the pixel Pᵢ is below the threshold Tᵢ associated to the pixel Pᵢ, then the device 55 determines an updated value of the first threshold uTᵢ.

For a given time slot TS, the device 55 stores, in a step E7, a plurality of values of the parameter θᵢ representing the temperature associated with the pixel Pᵢ, each of these values being calculating from a different frame F. The device 55 only stores the values of the parameter θᵢ representing the temperature associated with the pixel Pᵢ that are below the current value first threshold Tᵢ at the time of the comparison executed during step E3.

Based on these stored values of the parameter θᵢ representing the temperature associated with the pixel Pᵢ, the device 55 calculates a value of the first threshold Tᵢ which is the value used for the comparison of step E3 as long as the value of the parameter θᵢ representing the temperature associated with the pixel Pᵢ is above the first threshold Tᵢ.

When the value of the parameter θᵢ representing the temperature associated with the pixel Pᵢ is below the threshold Tᵢ associated to the pixel Pᵢ, then an updated value of the first threshold uTᵢ is calculated in a step E8. The updated value of the first threshold uTᵢ is a function of the current value of the first threshold Tᵢ and the value of the parameter θᵢ representing the temperature associated with the pixel Pᵢ that is below the threshold Tᵢ associated to the pixel Pᵢ determined during step E2.

The updated value of the first threshold uTᵢ is then used during step E3.

The steps E1 to E8 are executed for each pixels Pᵢ of each frame F.

A method for generating a model used form modeling the detection of a person with a thermal sensor 55 is now described.

A person is modeled in three dimensions by three cylinders as represented on **figure 5**. A first cylinder CH models the head of the person, a second cylinder CT models the torso and a third cylinder CL models the legs of the person. The relative coordinates of the location of the person are known. This location is relative to the thermal sensor.

The projection of each pixel of the thermal sensor 55 defines a pyramid P with a square base.

For a given pixel of the thermal sensor, knowing its viewing angle, i.e. the surface of the base of the pyramid P. This pyramid P is divided in N non overlapping subsection Ps of equal angles.

A model of a person is positioned in the viewing angle of the thermal sensor 55.

Then for each pixel of the thermal sensor, it is determined if a sub-sections Ps of the pyramid P intersects the cylinder CH, the cylinder CT and the cylinder CL.

If a sub-section Ps of the pyramid P intersects the cylinder CH, then the value of the parameter representing the temperature of the sub-section Ps is set to the predetermined temperature associated with the cylinder CH.

If a sub-section Ps of the pyramid P intersects the cylinder CT, then the value of the parameter representing the temperature of the sub-section Ps is set to the predetermined temperature associated with the cylinder CT.

If a sub-section Ps section of the pyramid P intersects the cylinder CL, then the value of the parameter representing the temperature of the sub-section Ps is set to the predetermined temperature associated with the cylinder CL.

If a sub-section Ps section of the pyramid P does not intersect any cylinder CH, CT, CL, then the value of the parameter representing the temperature of the sub-section Ps is set to of the predetermined temperature of the background.

The value of the parameter representing the temperature of a pixel is set to the sum of 1/N of the temperatures of the sub-section Ps, N being the total number of sub-sections.

Once the values of the parameters representing the temperature of the pixels have been calculated for all the pixels, the background temperature is subtracted from the pixel matrix.

Then, the total mass of the frame is calculated based on the result of this subtraction. The result is a group of adjacent pixels modeling the person. Another result of this subtraction is the orientation of this group of pixels, as well as any other relevant parameters that can be derived from the calculation of the frame mass.

Knowing the position of the group of pixels in the pixel matrix and knowing the relative position of the person in regard of the thermal sensor, it possible to build a database storing that information.

Such a model is computed for various background temperatures.

A plurality of services may be enabled through the present tracking system:
- Follow me service: a user start watching a movie on his living room TV. He stands up and move to the kitchen. As the position of the user is tracked, the movie is paused when he lived the living room, then resumed on the kitchen tablet
- Universal remote: using user position information, an application on the user's smartphone can have an adaptable interface proposing different controls in different locations: kitchen air conditioner in the kitchen, TV and fan in the living room, alarm clock and light in the bedroom.
- Robot companion at home knows where the users are, they can go toward them to provide them with services.
- Elderly assistance. Pattern analysis based on trajectory of the person can help detect abnormal behavior such as falling down, and triggers appropriate alerts

In a building:
- Cleaning optimization: the position of persons in the building is tracked and analyzed to determine where the more busy areas are. The cleaning service can then be dispatched more often in the busy areas.
- Emergency evacuation: evacuation routes can be adapted in real time depending on building occupancy, allowing avoiding congestion risks in emergency exits by directing people using density information
- Analysis of people flow to optimize deployment of advertisement, positioning of services...

## Claims

1. A method for tracking at least one person in a compound (1), using at least one tracking parameter comprising at least one position of a person, called current tracking parameter, the tracking parameter being stored in a location database of a tracking device (50) in relation to a user identifier for the person, the tracking device being operatively connected to a plurality of event generating devices (10, 20, 30, 40) located in the compound, the method comprising the following steps executed by the tracking device :
- receiving a message reporting an event detected by one of the event generating devices,
- determining a position in the compound associated to the detected event,
- predicting a new value of the tracking parameter based at least on the current tracking parameter,
- associating the detected event with the new value of the tracking parameter based on at least one parameter representing characteristics of the detected event.

2. The method of claim 1, further comprising:
- updating in the location database the tracking parameter in relation to the user identifier with the position of the detected event associated to the new value of the tracking parameter.

3. The method of claim 1, further comprising receiving over a predefined period of time a plurality of messages reporting events detected by the plurality of event generating devices, the associating comprising for the predefined period of time:
- selecting one or more detected events matching the new value of the tracking parameter based on at least one parameter representing characteristics of the detected events,
- updating in the location database the tracking parameter in relation to the user identifier based on the position (s) of the selected events
- storing the new value of the tracking parameter for the person in the location database .

4. The method of claim 1, comprising:
- receiving an identification identifier of a person associated to the detected event,
- storing in the location database the location of the detected event in relation to the user identifier for the person.

5. The method of claim 1, wherein the receiving of the identification information comprises:
- determining using the location database the identification information most likely to be associated to the event based at least on one parameter representing characteristics of the detected event.

6. A method of claim 4, further comprising when no associating of the detected event can be made with the new value of the tracking parameter in the location database:
- storing the position of the detected event as the initial tracking parameter for a new person.

7. A device for tracking at least one person in a compound (1), using at least one tracking parameter comprising at least one position of a person, called current tracking parameter, the tracking parameter being stored in a location database of a tracking device (50), the tracking device being operatively connected to a plurality of event generating devices (10, 20, 30, 40) located in the compound, the device being arranged to:
- receive a message reporting an event detected by one of the event generating devices,
- determine a position in the compound associated to the detected event,
- predict a new value of the tracking parameter based at least on the current tracking parameter,
- associate the detected event with the new value of the tracking parameter based on at least one parameter representing characteristics of the detected event.

8. Computer program **characterized in that** it comprises program code instructions for the implementation of the steps of the method for tracking at least one person as claimed in one of the claims 1 to 6 when the program is executed by a processor.
